# EUROPEAN PATENT SPECIFICATION

(11) **EP 2 203 009 B1**
(45) Date of publication and mention of the grant of the patent: **23.05.2012**
(21) Application number: 08172740.6
(22) Date of filing: 23.12.2008
(51) Int. Cl.: H04W 16/14, H04W 84/18

(54) **A wireless network manager, method and system**
Drahtloser Netzwerkverwalter, Verfahren und System
Administrateur, procédé et système de réseau sans fil

(43) Date of publication of application: 30.06.2010
(73) Proprietor: ABB Research Ltd., 8050 Zürich (CH)
(72) Inventor: Lennvall, Tomas, 722 21 Västerås (SE); Landernäs, Krister, 724 61 Västerås (SE)
(74) Representative: Kock, Ina

(56) References cited:
- WO-A-2004/045092
- WO-A-2006/067271
- WO-A-2007/031960
- US-A1- 2003 108 008
- US-A1- 2007 268 884

## Description

### TECHNICAL FIELD

The present invention relates generally to wireless network managers, and more particularly to reducing a risk of interference between wireless networks.

### BACKGROUND

Wireless sensor networks are becoming more and more common in industrial plants. This naturally gives the advantage of communication from and/or to sensors, or other device, without the need for wires. Consequently, the networks are easier to deploy, maintain and eventually, de-commission.

However, when multiple wireless networks are used, interference between networks may cause problems. This interference may result in packets not being received properly, which may require re-transmission of any packets which have been subject to interference. This will delay the communication and will also use more energy, which is particularly problematic when the sensors are battery powered, which is frequently the case with industrial wireless sensor networks.

The United States patent application with publication number US2006/0094371 describes automatic channel selection in a wireless access point. An automatic channel selection (ACS) process enables an access point to determine a best channel available, i.e., the channel with a least amount of interference, for its operation. When ACS is enabled, the access point scans frequencies for all neighboring access points and their signal strengths. Based on this data, the access point then determines which frequency is least likely to be interfered with by these other access points. The access point switches itself to this frequency and begins operation. This rudimentary approach may work in situation where only the aspect of frequency is used to separate channels. However, the automatic channel selection described can not be used for situations where the same frequency is used across several access points.

In WO-2007/031960 self-coexistence of first and second wireless communication networks is improved by transmitting a coexistence beacon from a first station of the first wireless communication network to a first station of the second wireless communication network. The coexistence beacon includes information about a traffic reservation of the first station of the first wireless communication network. The first station of the second wireless communication network may then use this information in a variety of ways to reduce data collisions between the two networks.

US-2003/108008 presents an arrangement including a scannable matrix for predicting the occurrence of a future collision of frequency hops of the channel hopping patterns on the respective activated first paths of a Bluetooth packet transmission system is described. A first coordinate of the matrix defines columns representative of a selectable window of N successive future time slots of the channel hopping patterns, and a second coordinate of the matrix defines rows each exhibiting the successive frequency hops of the patterns segments transmitted on a separate one of the activated channels during such window. The first coordinate is scanned to detect the occurrence, if any, of identical frequency hops appearing at an intersection of the then-scanned column and at least a pair of the rows. If a particular scan does not detect an occurrence of such identical frequency hops in any of the time slots of the scanned window, the first coordinate may be incremented by a selected number of time slots at the end of the scan, and the scan is then successively repeated for each new window that results.

### SUMMARY OF THE INVENTION

An object of the present invention is to reduce interference between wireless networks for industrial devices.

In a first aspect of the invention, it is presented a method for reducing interference between wireless networks for industrial devices according to claim 1.

By avoiding the time slots in use by the remote wireless network when generating the local time slot schedule, the risk of interference is reduced.

It is to be noted that the terms local and remote are only in relation to what wireless network manager is to be generated a new time slot schedule for. In other words, the local wireless network manager is called so because it is the wireless network manager in question for which a time slot schedule is generated. Analogously, the remote wireless network manager is only called so because it is not the local wireless network manager, and in relation to the local wireless network manager it is remote since it is not in the exact same location.

In the step of generating, optionally, only time slots of wireless devices within range of the local wireless network manager are considered when avoiding time slots in use by the remote wireless network.

In other words, other time slots, used by devices not within the range of the local wireless network manager, can be used by the local wireless network manager. By reusing these time slots, the overall system capacity is increased.

Optionally, the method is performed only in conjunction with deployment of the local wireless network manager. In cases where the time slot schedules are fixed over time, it is only necessary to perform the method during deployment.

The step of obtaining may include obtaining the remote time slot schedule from the remote network manager. By obtaining the remote time slot schedule directly from the remote wireless network manager, no central repository is required.

The step of obtaining may include obtaining the remote time slot schedule from a central multi-network manager. Using a central multi-network manager as a central repository for time slot schedules, any time slot schedule can be obtained even if, for example, the remote wireless network manager in question temporarily is non-operational.

A second aspect of the invention is a wireless network manager, being a local wireless network manager, arranged to reduce interference between wireless networks for industrial device according to claim 6.

The wireless network manager may be arranged to consider only time slots of wireless devices within range of the local wireless network manager when avoiding time slots in use by the remote wireless network.

The wireless network manager may be arranged to obtain the remote time slot schedule from the remote network manager.

The wireless network manager may be arranged to obtain the remote time slot schedule from a central multi-network manager.

The local network manager may be arranged to, on request, provide information regarding its time slot schedule.

A third aspect of the invention is a wireless system comprising at least two wireless network managers according to the second aspect.

Each of the at least two wireless network managers may operate as either a local wireless network manager or a remote wireless network manager.

The wireless system may further comprise a central multi-network manager arranged to provide time slot schedules.

A fourth aspect of the invention is a computer program product loadable into the internal memory of a wireless network manager, arranged to perform the method according to the first aspect, when the product is executed in the wireless network manager.

It is to be noted that any feature of the first, second, third, fourth and/or fifth aspects may, where appropriate, be applied to any other aspect.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF DRAWINGS

The invention is now described, by way of example, with reference to the accompanying drawings, in which:
Fig 1a is a schematic diagram illustrating an environment where the present invention can be embodied,
Fig 1b is a schematic diagram illustrating a system according to an alternative embodiment of the present invention,
Fig 2a is a schematic diagram of a remote time slot schedule of the remote wireless network manager of Figs1a-b,
Fig 2b is a schematic diagram of a local time slot schedule of the local wireless network manager of Figs 1a-b, and
Fig 3 is a flow chart illustrating a method of obtaining a time slot schedule for a wireless network manager, such as the local wireless network manager of Figs 1a-b.

### DETAILED DESCRIPTION OF PREFERRED EMBODIMENTS

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

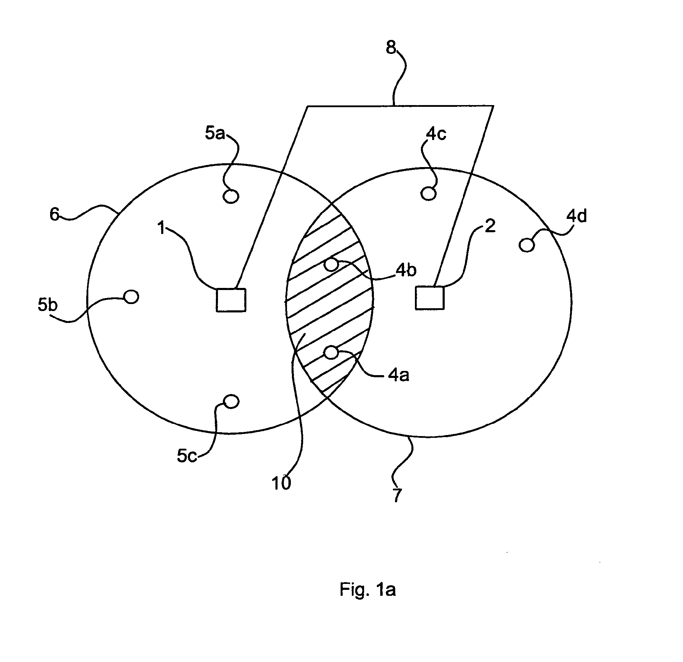

Fig 1a is a schematic diagram illustrating an environment where the present invention can be embodied.

In the situation, schematically depicted as a top view of network topology for the two networks 6 and 7, a first wireless network manager 1 is to be deployed, e.g. in an industrial setting. The first network manager will be responsible for a first network 6, enabling communication for devices 5a-c of the first network. A second network manager 2 is already deployed and is in an operating state, responsible for network 7. There is a geographical overlap between the two networks 1 and 2, indicated by the dashed area 10.

The wireless networks 6,7 are any wireless networks utilising Time Division Multiplex Access (TDMA) which is suitable for use in an industrial environment. For example, the wireless networks 6,7 can conform to wireless sensor networks according to the IEEE 802.15.4 standard, such as WirelessHART or ISA100, or other standards such as Bluetooth®. It is to be noted that even if frequency hopping can be used in the network to reduce the risk of interference, in the embodiments shown herein, the risk for interference is reduced even further.

The second network manager 2 enables communication for any of the devices 4a-4d within its network 7.

The first network 6 is herein also denoted the local network 6, with the first wireless network manager 1 being denoted a local wireless network manager 1. Analogously, the second network 7 is herein denoted a remote network 7 with the second wireless network manager 2 being denoted a remote wireless network manager 2. It is to be noted that the terms local and remote are only in relation to deploying the local wireless network manager 1. In other words, the local wireless network manager 1 is called so because it is the wireless network manager in question which is being deployed. Analogously, the remote wireless network manager 2 is only called so because it is not the local wireless network manager 1 which is being deployed, and in relation to the local wireless network manager 1 it is indeed remote since it is in another location.

When the local wireless network manager 1 is to be deployed, there is potential interference in the overlapping area 10. As the skilled person will realise, this is a simplification of reality where there the ranges of the networks 6, 7 are not as definitively defined. Nevertheless, such a simplification makes the explanation of the embodiment clearer, and the loss of this detail does not matter in this context.

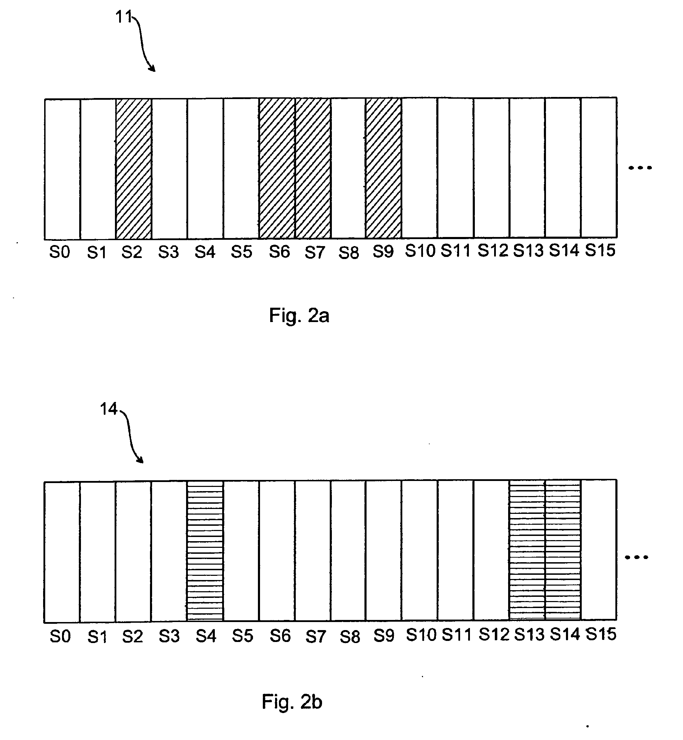

In this example, there are two devices 4a, 4b of the remote wireless network 7 in the overlapping area 10. Since these devices 4a-b are in range of the local wireless network manager 1, the local wireless network manager 1 can listen to any communication between the devices 4a, 4b and the remote wireless network manager 2. The local wireless network manager 1 can in this way obtain information about the remote network 7. In the case that the network is an IEEE 802.15.4 network, such as WirelessHART, the header of each data link layer (DLL) packet contains a network identifier. Hence, the local wireless network manager 1 can obtain the identity of the remote wireless network 7 by scanning for DLL packets. Moreover, addresses of the devices 4a, 4b are also obtainable by listening to the DLL packets. The addresses can be used to identify the devices 4a, 4b, e.g. to identify time slots used by these devices 4a, 4b in the scenario described in conjunction with Figs 2a-b below.

Once the local wireless network manager 1 obtains the identity of the remote wireless network 7, it sends a message to the remote wireless network manager 2 to obtain a remote time slot schedule. The local wireless network manager 1 and the remote wireless network manager 2 are typically connected with a wire based connection 8, e.g. an Ethernet connection, a universal serial bus (USB), an RS232 serial connection, etc. However, any suitable wire based or wireless connection 8 can be used, including IEEE 802.11a/b/g/n, wireless USB, mobile phone based connection, etc. Optionally, the connection 8 is used to allow the devices 4a-f, 5a-c and/or the wireless network manager 1,2 to communicate with other entities, including, but not limited to desktop/laptop computers, servers, hand-held computers, and/or mobile phones, using e.g. local networks, wide area networks, and/or mobile networks. After receiving the request for the remote time slot schedule, the remote wireless network manager 2 sends its remote time slot schedule to the local wireless network manager 1 via the connection 8.

As is explained in more detail below, the local wireless network manager 1 then generates a local time slot schedule which, to the extent that it is possible, avoids using time slots of the remote time slot schedule which can interfere, at least in the overlapping area 10.

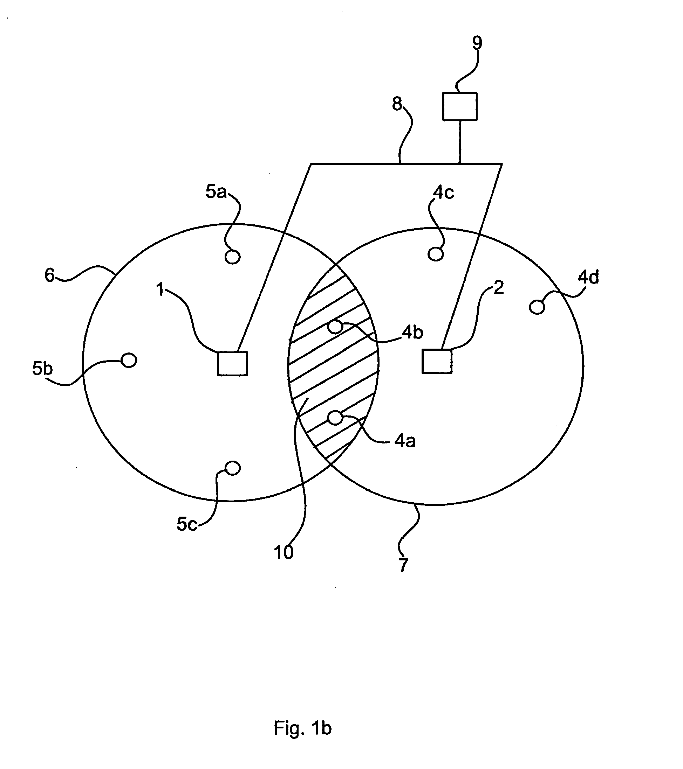

Fig 1b is a schematic diagram illustrating a system according to an alternative embodiment of the present invention. The main difference in this embodiment is that a central multi-network manager 9 is connected to the connection 8, allowing the multi-network manager 9 to communicate with the local wireless network manager 1 and the remote wireless network manager 2. This multi-network manager 9 is responsible for storing all time slot schedules within its area of responsibility. The multi-network manager 9 can for example be a desktop computer, a server, or a custom made product. The only requirements on the multi-network manager 9 for this purpose is that it is connected to the connection 8 and that it can provide time slot schedules when requested.

The multi-network manager 9 can for example be responsible for the time slot schedules of wireless network managers of a building or a plurality of buildings within a plant or factory. Hence, after the local wireless network manager 1 has obtained the identity of the remote wireless network 7, the local wireless network manager 1 obtains, upon request, the remote time slot schedule from the multi-network manager 9. Optionally, all time slot schedules available to the multi-network manager are provided to the requesting party, whereby the requesting party can discard superfluous time schedules and only use the time schedule(s) of interest.

Furthermore, after generation of the local time slot schedule, the local time slot schedule is communicated to the multi-network manager 9. This communication of the local time slot schedule can either be push based, whereby the local wireless network manager 1 initiates the communication upon generation of the local time slot schedule, or the communication can be pull based, whereby the multi-network manager 9 asks the local wireless network manager 1 for the local time slot schedule. All other elements of Fig 1b correspond to those of Fig 1a.

Fig 2a is a schematic diagram of a remote time slot schedule 11 of the remote wireless network manager 2 of Figs 1a-b.

As is known in the art per se, a time slot schedule can be used when Time Division Multiple Access (TDMA) is at least part of the solution for multiplexing a plurality of channels. TDMA allows a band of a particular frequency range to be divided into channels by assigning time slots for each such channel. In this example, the remote time slot schedule 11, corresponding to one frame, is divided into sixteen time slots s0-s15. Four slots s2, s6, s7, s9 have been assigned in this particular case, allowing separate channels for each of the devices 4a-d of the remote wireless network of Figs la-b.

Fig 2b is a schematic diagram of a local time slot schedule of the local wireless network manager 2 of Figs la-b. This local time slot schedule 14 is generated using the remote time slot schedule 11 as an input. Hence time slots s2, s6, s7, s9 can be avoided to reduce the risk for interference. In this example, the local time slot schedule 14 assigns slots s4, s13 and s14 for the devices 5a-c of the local network 6.

Optionally, during the generation it is attempted to avoid to assign local time slots directly adjacent to assigned time slots of the remote time slot schedule 11. Hence, in this case, time slots s1-s3 and s5-s10 are avoided. This can reduce the interference, particularly if the local wireless network manager 1 and the remote wireless network manager 2 are not synchronised. A guard time slot is thus provided between the two networks 6, 7, reducing the risk for interference even further.

Furthermore, optionally only the time slots of the remote time slot schedule 11 corresponding to the devices 4a-b of the overlapping area 10 are avoided. So for example, if the device 4a is assigned time slot s2 and the device 4b is assigned time slot s6, only time slots s2 and s6 (or if guard time slots are used, s1-s3 and s5-s7) are avoided. This allows for more efficient use of the available wireless resources. Since, for example, communication between the remote wireless network manager 2 and the device 4d will not interfere with the local network 6, the time slot associated with this communication can be re-used.

It is to be noted that the number of time slots, sixteen in this case, is just an example. The present invention can be embodied where any number of suitable time slots are used.

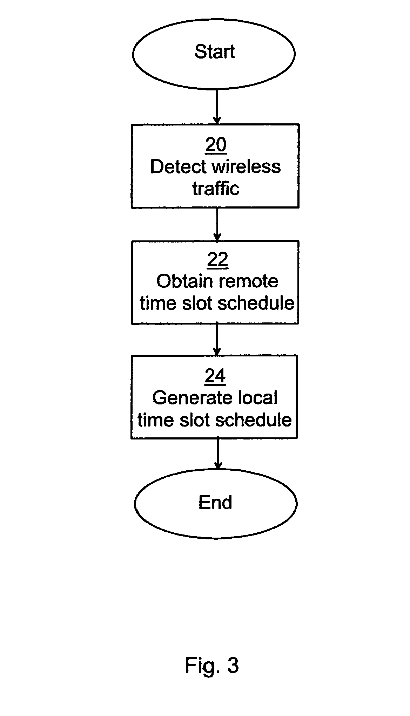

Fig 3 is a flow chart illustrating a method of obtaining a time slot schedule for a wireless network manager, such as the local wireless network manager 1 of Figs 1a-b.

In a detect wireless traffic step 20, the local wireless network manager 1 detects wireless traffic between devices and one or more remote wireless network managers 2. For example, in Fig 1a-b, the local wireless network manager 1 detects packets sent from the devices 4a-b to the remote wireless network manager 2. This can be done since the devices 4a-b are within the network range 6 of the local wireless network manager 1. As explained above, from the detected packets, a number of data items can be extracted. Specifically, an identifier of the remote network 7 and/or the remote wireless network manager 2 is extracted. Moreover, addresses and/or other identifiers of the devices 4a-b can be extracted. Other useful data may also be extracted from the detected packets.

In an obtain remote time slot schedule step 22, the time slot schedule 11 (Fig 2a) of the remote wireless network manager 2 is obtained. This can either be obtained directly from the remote wireless network manager 2, as illustrated in Fig 1a, or via a central multi-network manager 9 as illustrated in Fig 1b.

In a generate local time slot schedule step 24, the local time slot schedule 14 (Fig 2b) is generated in the local wireless network manager 1. The principle is to avoid any time slots which may interfere with the network being deployed, as described in more detail in conjunction with Fig 2b above.

Once the local time slot schedule 14 is generated, it is used when the network 6 is activated for the local wireless network manager 1.

The method just described can be implemented as embodied in computer code, to be loaded in internal memory of the local wireless network manager 1, to be executed in a controller in the local wireless network manager 1.

Although the invention has herein been described in a context of two networks, it is to be noted that the invention can be used in any number of networks, as long as there are at least two networks. The local wireless network manager 1 would then perform in the way described above in relation to the remote wireless network manager 2, only repeated for each remote wireless network manager which comprises any devices within the coverage of the local network 6.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for reducing interference between wireless networks for industrial devices, comprising the steps of:
detecting (20), in a local wireless network manager (1), wireless traffic from a wireless device (4a,4b) to a remote wireless network manager (2), yielding an identifier of the remote wireless network manager (2);
obtaining (22) a remote time slot schedule (11) of said remote wireless network manager (2) using said identifier of the remote wireless network manager (2); and
generating (24), based on said remote time slot schedule (11), a local time slot schedule (14) for said local wireless network manager (1), said local time slot schedule (14) comprising time slot assignments at least partly avoiding time slots in use by a remote wireless network associated with said remote wireless network manager (2).

2. The method according to any claim 1, wherein in said step of generating, only time slots of wireless devices (4a,4b) within range of said local wireless network manager (1) are considered when avoiding time slots in use by said remote wireless network.

3. The method according to claim 1 or 2, wherein said method is only performed in conjunction with deployment of said local wireless network manager (1).

4. The method according to any one of the preceding claims, wherein said step of obtaining includes obtaining said remote time slot schedule (11) from said remote network manager.

5. The method according to any one of claims 1 to 3, wherein said step of obtaining includes obtaining said remote time slot schedule (11) from a central multi-network manager.

6. A wireless network manager, being a local wireless network manager (1), arranged to reduce interference between wireless networks for industrial devices, said local wireless network manager (1) comprising:
means for detecting wireless traffic from a wireless device (4a,4b) to a remote wireless network manager (2), yielding an identifier of the remote wireless network manager (2);;
means for obtaining a remote time slot schedule (11) of said remote wireless network manager (2) using said identifier of the remote wireless network manager (2); and
means for generating, based on said remote time slot schedule (11), a local time slot schedule (14) for said local wireless network manager (1), said local time slot schedule (14) comprising time slot assignments at least partly avoiding time slots in use by a remote wireless network associated with said remote wireless network manager (2).

7. The wireless network manager according to claim 6, arranged to consider only time slots of wireless devices (4a,4b) within range of said local wireless network manager (1) when avoiding time slots in use by said remote wireless network.

8. The wireless network manager according to claim 6 or 7, arranged to obtain said remote time slot schedule (11) from said remote network manager.

9. The wireless network manager according to claim 6 or 7, arranged to obtain said remote time slot schedule (11) from a central multi-network manager.

10. The wireless network manager according to any one of claims 6 to 10, wherein said local network manager is arranged to, on request, provide information regarding its time slot schedule.

11. A wireless system comprising at least two wireless network managers according to claims 6 to 10.

12. The wireless system according to claim 11, further comprising a central multi-network manager arranged to provide time slot schedules.

13. A computer program product loadable into the internal memory of a wireless network manager, arranged to perform the method according to any one of claims 1 to 5, when said product is executed in said wireless network manager.

## Patentansprüche

1. Verfahren zum Verringern von Störbeeinflussung zwischen drahtlosen Netzwerken für industrielle Vorrichtungen, umfassend die Schritte:
Erfassen (20) von Drahtlosverkehr in einem lokalen Drahtlosnetzwerkverwalter (1) von einer Drahtlosvorrichtung (4a, 4b) zu einem entfernt liegenden Drahtlosnetzwerkverwalter (2), wobei eine Kennung des entfernt liegenden Drahtlosnetzwerkverwalters (2) geliefert wird;
Beschaffen (22) eines Fern-Zeitschlitzablaufplans (11) des entfernt liegenden Drahtlosnetzwerkverwalters (2) unter Verwendung der Kennung des entfernt liegenden Drahtlosnetzwerkverwalters (2); und
Erzeugen (24) eines lokalen Zeitschlitzablaufplans (14) für den lokalen Drahtlosnetzwerkverwalter (1) auf der Grundlage des Fern-Zeitschlitzablaufplans (11), wobei der lokale Zeitschlitzablaufplan (14) Zeitschlitzzuweisungen umfasst, wobei mindestens zum Teil Zeitschlitze vermieden werden, die durch ein entfernt liegendes drahtloses Netzwerk verwendet werden, das mit dem entfernt liegenden Drahtlosnetzwerkverwalter (2) in Zusammenhang ist.

2. Verfahren nach Anspruch 1, wobei in dem Erzeugungsschritt nur Zeitschlitze von Drahtlosvorrichtungen (4a, 4b) in Bereich des lokalen Drahtlosnetzwerkverwalters (1) in Betracht gezogen werden, wenn Zeitschlitze vermieden werden, die durch das entfernt liegende drahtlose Netzwerk verwendet werden.

3. Verfahren nach Anspruch 1 oder 2, wobei das Verfahren nur in Verbindung mit Einsatz des lokalen Drahtlosnetzwerkverwalters (1) ausgeführt wird.

4. Verfahren nach einem der vorhergehenden Ansprüche, wobei der Beschaffungsschritt Beschaffen des Fern-Zeitschlitzablaufplans (11) von dem entfernt liegenden Netzwerkverwalter einschließt.

5. Verfahren nach einem der Ansprüche 1 bis 3, wobei der Beschaffungsschritt Beschaffen des Fern-Zeitschlitzablaufplans (11) von einem zentralen Multi-Netzwerkverwalter einschließt.

6. Drahtlosnetzwerkverwalter, der ein lokaler Drahtlosnetzwerkverwalter (1) ist, der eingerichtet ist zum Verringern der Störbeeinflussung zwischen drahtlosen Netzwerken für industrielle Vorrichtungen, wobei der lokale Drahtlosnetzwerkverwalter (1) umfasst:
Mittel zum Erfassen von Drahtlosverkehr von einer Drahtlosvorrichtung (4a, 4b) zu einem entfernt liegenden Drahtlosnetzwerkverwalter (2), wobei eine Kennung des entfernt liegenden Drahtlosnetzwerkverwalters (2) geliefert wird;
Mittel zum Beschaffen eines Fern-Zeitschlitzablaufplans (11) des entfernt liegenden Drahtlosnetzwerkverwalters (2) unter Verwendung der Kennung des entfernt liegenden Drahtlosnetzwerkverwalters (2); und
Mittel zum Erzeugen eines lokalen Zeitschlitzablaufplans (14) für den lokalen Drahtlosnetzwerkverwalter (1) auf der Grundlage des Fern-Zeitschlitzablaufplans (11), wobei der lokale Zeitschlitzablaufplan (14) Zeitschlitzzuweisungen umfasst, wobei mindestens zum Teil Zeitschlitze vermieden werden, die durch ein entfernt liegendes drahtloses Netzwerk verwendet werden, das mit dem entfernt liegenden Drahtlosnetzwerkverwalter (2) in Zusammenhang ist.

7. Drahtlosnetzwerkverwalter nach Anspruch 6, der eingerichtet ist, nur Zeitschlitze von Drahtlosvorrichtungen (4a, 4b) in Bereich des lokalen Drahtlosnetzwerkverwalters (1) in Betracht zu ziehen, wenn Zeitschlitze vermieden werden, die durch das entfernt liegende drahtlose Netzwerk verwendet werden.

8. Drahtlosnetzwerkverwalter nach Anspruch 6 oder 7, der eingerichtet ist, den Fern-Zeitschlitzablaufplan (11) von dem entfernt liegenden Netzwerkverwalter zu erhalten.

9. Drahtlosnetzwerkverwalter nach Anspruch 6 oder 7, der eingerichtet ist, den Fern-Zeitschlitzablaufplan (11) von einem zentralen Multi-Netzwerkverwalter zu erhalten.

10. Drahtlosnetzwerkverwalter nach einem der Ansprüche 6 bis 10, wobei der lokale Netzwerkverwalter eingerichtet ist, auf Anforderung Informationen bezüglich seines Zeitschlitzablaufplans bereitzustellen.

11. Drahtloses System, das mindestens zwei Drahtlosnetzwerkverwalter gemäß den Ansprüchen 6 bis 10 umfasst.

12. Drahtloses System nach Anspruch 11, ferner einen zentralen Multi-Netzwerkverwalter umfassend, der zum Bereitstellen von Zeitschlitzablaufplänen eingerichtet ist.

13. Computerprogrammprodukt, das in den internen Speicher eines Drahtlosnetzwerkverwalters geladen werden kann, welches eingerichtet ist, das Verfahren nach einem der Ansprüche 1 bis 5 durchzuführen, wenn das Produkt in dem Drahtlosnetzwerkverwalter ausgeführt wird.

## Revendications

1. Procédé de réduction de l'interférence entre des réseaux sans fil pour des dispositifs industriels, comprenant les stades dans lesquels :
on détecte (20) dans un gestionnaire (1) local de réseau sans fil du trafic sans fil allant d'un dispositif (4a, 4b) sans fil à un gestionnaire (2) éloigné de réseau sans fil, ce qui fournit un identificateur du gestionnaire (2) éloigné de réseau sans fil ;
on obtient un plan (11) éloigné de tranches de temps du gestionnaire (2) éloigné du réseau sans fil en utilisant l'identificateur du gestionnaire (2) éloigné de réseau sans fil ; et
on produit (24), sur la base du plan (11) éloigné de tranches de temps, un plan (14) local de tranches de temps pour le gestionnaire (1) local de réseau sans fil, le plan (14) local de tranches de temps comprenant des affectations de tranches de temps évitant au moins en partie des tranches de temps en utilisation par un réseau sans fil éloigné, associé au gestionnaire (2) éloigné de réseau sans fil.

2. Procédé suivant la revendication 1, dans lequel, dans le stade de production, on considère seulement des tranches de temps de dispositif (4a, 4b) sans fil dans le domaine du gestionnaire (1) local de réseau sans fil, lorsque l'on évite des tranches de temps en utilisation par le réseau sans fil éloigné.

3. Procédé suivant la revendication 1 ou 2, dans lequel on effectue le procédé seulement en conjonction avec un déploiement du gestionnaire (1) local de réseau sans fil.

4. Procédé suivant l'une quelconque des revendications précédentes, dans lequel le stade d'obtention comprend obtenir le plan (11) éloigné de tranches de temps à partir du gestionnaire de réseau éloigné.

5. Procédé suivant l'une quelconque des revendications 1 à 3, dans lequel le stade d'obtention comprend obtenir le plan (11) éloigné de tranches de temps à partir d'un gestionnaire central de réseaux multiples.

6. Gestionnaire de réseau sans fil, qui est un gestionnaire (1) local de réseau sans fil, agencé pour réduire de l'interférence entre des réseaux sans fil pour des dispositifs industriels, le gestionnaire (1) local de réseau sans fil comprenant :
des moyens de détection du trafic sans fil allant d'un dispositif (4a, 4b) sans fil à un gestionnaire (2) éloigné de réseau sans fil, ce qui fournit un identificateur du gestionnaire (2) éloigné de réseau sans fil ;
des moyens d'obtention d'un plan (11) éloigné de tranches de temps du gestionnaire (2) éloigné de réseau sans fil utilisant l'identificateur du gestionnaire (2) éloigné de réseau sans fil ; et
des moyens de production, sur la base du plan (11) éloigné de tranches de temps, d'un plan (14) local de tranches de temps pour le gestionnaire (1) local de réseau sans fil, le plan (14) local de tranches de temps comprenant des affectations de tranches de temps évitant au moins en partie des tranches de temps en utilisation par un réseau sans fil éloigné associé au gestionnaire (2) éloigné, de réseau sans fil.

7. Gestionnaire de réseau sans fil suivant la revendication 6, conçu pour considérer seulement des tranches de temps de dispositif (4a, 4b) sans fil, dans le domaine du gestionnaire (1) local de réseau sans fil, lorsque l'on évite des tranches de temps en utilisation par le réseau sans fil éloigné.

8. Gestionnaire de réseau sans fil suivant la revendication 6 ou 7, conçu pour obtenir le plan (11) éloigné de tranches de temps du gestionnaire éloigné de réseau.

9. Gestionnaire de réseau sans fil suivant la revendication 6 ou 7, conçu pour obtenir le plan (11) éloigné de tranches de temps d'un gestionnaire central de réseaux multiples.

10. Gestionnaire de réseau sans fil suivant l'une quelconque des revendications 6 à 10, dans lequel le gestionnaire local de réseau est conçu pour, sur demande, fournir de l'information concernant son plan de tranches de temps.

11. Système sans fil, comprenant au moins deux gestionnaires de réseau sans fil suivant les revendications 6 à 10.

12. Système sans fil suivant la revendication 11, comprenant en outre, un gestionnaire central de réseaux multiples, conçu pour fournir des plans de tranches de temps.

13. Produit de programme informatique pouvant être chargé dans la mémoire interne d'un gestionnaire de réseau sans fil conçu pour effectuer le procédé suivant l'une quelconque des revendications 1 à 5, lorsque le produit est exécuté dans le gestionnaire de réseau sans fil.
